# EUROPEAN PATENT APPLICATION

(11) **EP 4 292 988 A1**
(43) Date of publication of application: **20.12.2023**
(21) Application number: 22178993.6
(22) Date of filing: 14.06.2022
(51) Int. Cl.: C02F 1/48, C02F 1/04, C02F 103/02, C02F 1/44, A61L 2/14, C02F 1/46

(54) **WATER PLASMA ACTIVATION OF DEMINERALIZED WATER**

(71) Applicant: Koninklijke Philips N.V., 5656 AG Eindhoven (NL)
(72) Inventor: GOTTENBOS, Bart, Eindhoven (NL); BORN, Matthias, Eindhoven (NL); HORSTMAN, Pieter, Eindhoven (NL)
(74) Representative: Philips Intellectual Property & Standards

(57) **Abstract**

A Plasma Activated Water (PAW) generating device (20) comprising:
a water demineralization means (24) for demineralizing water; and
a water plasma-activation means (26),
wherein the water plasma-activation means (26) is arranged for plasma-activating water demineralized by the water demineralization means (24).

## Description

### FIELD OF THE INVENTION

This invention relates to a device and method for generating plasma activated water.

### BACKGROUND OF THE INVENTION

Plasma activated water (PAW) has been shown to have potent anti-microbial activities. PAW has multiple potential application areas. One is in the oral healthcare space, where PAW could be used for plaque reduction purposes, through the anti-microbial action on plaque bacteria. For example, it could be used as an alternative or supplement to traditional mouthwash. It could be integrated in oral irrigators or toothbrushes. Another area where PAW might be applied is in skin sanitization, for example for odor reduction in armpits.

### SUMMARY OF THE INVENTION

It is a recognition of the inventors that, since PAW has to be made just before use, it could potentially be made from tap water. The inventors undertook research of this idea in the laboratory.

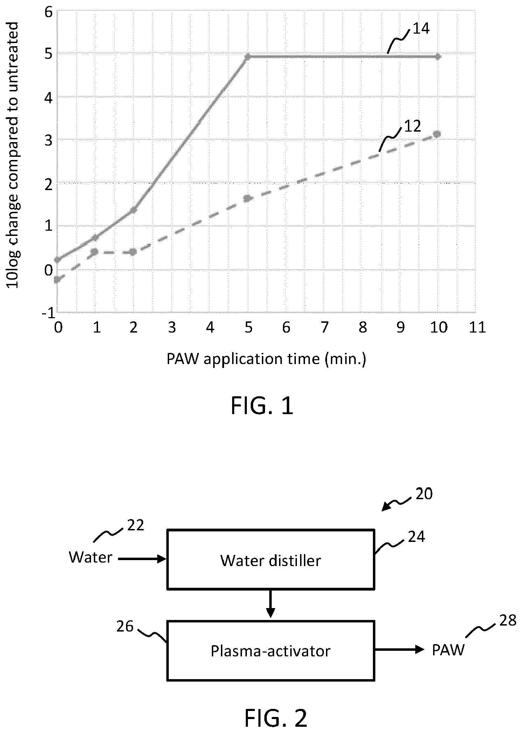

In the course of this research, the inventors found however that there was a striking difference in PAW antimicrobial efficacy when comparing PAW generated from tap water with PAW generated from demineralized water. This is illustrated in Fig. 1 which shows the log reduction in bacterial counts (y-axis) as a function of time (x-axis) for plasma activation applied to tap water (line 12) as compared to demineralized water (line 14). It can be seen that the use of tap water reduces the efficacy of the plasma-activation by 10 to even 1000-fold. Therefore, it has been recognized by the inventors that the use of tap water in a PAW generating system may not lead to optimum anti-microbial effect.

Moreover, tap water has a strong regional variation in its mineral content, which makes the quality of the generated PAW very difficult to predict. However, if users are required to buy demineralized water, this reduces convenience, adds cost, and reduces efficiency (due to the additional upstream energy footprint associated with bottling, shipping and storing store-bought distilled water).

The invention is defined by the claims.

According to examples in accordance with an aspect of the invention, there is provided a Plasma Activated Water (PAW) generating device comprising: a water demineralization means for demineralizing water; and a water plasma-activation means, wherein the water plasma-activation means is arranged for plasma-activating water demineralized by the water demineralization means.

Thus, embodiments of this invention propose to integrate a water demineralization means in the same device as a plasma activator, thereby enabling demineralization of water directly in advance of its plasma activation. This allows the resulting device to receive as a direct fluid input a mineralized water source (such as tap water), but without the reduced plasma activation efficiency discussed above which is associated with such a water source.

In some embodiments, the water demineralization means comprises a water distillation means, for demineralizing water by evaporation. Instead of distillation, other forms of water demineralization may be used such as reverse osmosis.

In some embodiments, the water demineralization means includes a water evaporator to generate steam from an input water source.

In some embodiments, the device includes a chamber arranged to receive the steam generated by such a water evaporator.

In some embodiments, the aforementioned chamber acts as both a plasma activation chamber, in which water reacts with plasma-phase air, and a condensation chamber for condensing the steam. In this preferred set of embodiments, the plasma activation can be activated in the process of condensation, providing extremely fast and efficient plasma component dissolution in the water, due in part to the optimal volume/surface area of the droplets. Ultrapure fine distilled water droplets quickly take up the generated reactive plasma agents. In other words, the two processes of demineralization and plasma activation are interwoven with one another, with the condensation stage of the distillation being combined with the plasma activation stage of the PAW generation. Thus there is synergistic interaction between the demineralization and plasma activation stages in this embodiment of the proposed invention.

In some embodiments, the device includes a water inlet for a user to input water-to-be-treated.

In some embodiments, a conduit fluidly connects the aforementioned inlet to the water evaporator.

In some embodiments, the aforementioned conduit is in thermal communication with the chamber, for providing heat transfer from the chamber to input water flowing through the conduit.

Thus, the tube from the inlet to the evaporator acts as a heat exchanger. The cold water cools the distillation chamber when running to the evaporator, which reduces the energy required for heating the water and eliminates the need for active cooling.

In some embodiments, the aforementioned conduit passes through the chamber, with walls of the conduit exposed to an atmosphere inside the chamber. This facilities the thermal coupling between the flow passage formed by the conduit and the interior of the chamber.

In some embodiments, the water evaporator comprises a boiler having a boiler chamber for holding water to be evaporated and a heat source for heating the water to steam.

In some embodiments, the device comprises a housing.

In some embodiments, the boiler is located beneath the chamber in the aforementioned housing.

In some embodiments, the boiler is fluidly connected to the chamber to permit escape of steam during use into the chamber above for condensation.

In use, the housing would be oriented relative to gravity, so that the terms 'above' and 'beneath' are relative to a vertical axis defining a gravitational vertical during normal use.

The above-described arrangement is highly structurally efficient because, with the housing oriented parallel with gravitational vertical in use, gravity aids flow of input water down into the boiler, and further aids flow of water condensate from upper regions of the chamber to lower regions of the chamber where, for example, it can be collected in a collection area. This avoids the need for pumps to convey water. However, use of pumps or other powered hydraulics is a viable alternative.

In some embodiments, the device comprises a collector outlet for collecting condensed, plasma-activated water from the chamber.

In some embodiments, the device comprises a collection chamber for holding plasma-activated water conveyed out of the chamber through the collector outlet.

In some embodiments, a floor of the chamber is inclined toward the collector outlet. This efficiently utilizes gravity to aid in the transport of the processed water to a collection area. However, this is not essential, and instead for example a pump could be used to evacuate water from the condensation chamber.

In some embodiments, the device further includes a water reservoir for holding water-to-be-treated.

In some embodiments, the water reservoir is positioned so as, in use, to be raised gravitationally relative to the evaporator, and connected to the boiler chamber by a conduit, permitting continuous supply of the boiler chamber from the reservoir through gravitational flow.

In some embodiments, the device comprises a housing, and wherein the water demineralization means and water plasma activation means are integrated in the housing.

In other words, the two functional modules are integrated in a single structural unit.

Another aspect of the invention is a method for combined demineralization and plasma-activation of water. The method comprises: receiving a source of water to be treated; demineralizing the water; and plasma-activating the demineralized water.

In some embodiments, the method comprises demineralizing the water through distillation.

In some embodiments, the demineralizing and the plasma-activating are both performed at least partially within a common chamber.

In some embodiments, where the demineralizing comprises distillation, a water condensation part of the distillation and the plasma-activating may both be performed in a common chamber.

In some embodiments, the method comprises evaporating the water-to-be-treated to steam, the steam thereby being demineralized.

In some embodiments, the method comprises condensing the steam in a chamber to produce water condensate.

In some embodiments, the method comprises plasma-activating the water condensate in the chamber.

The water condensate may comprise water droplets. A thin film that is constantly replenished by condensing droplets on a condensation surface is also beneficial for PAW production.

In some embodiments, the source of water is tap water.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a graph showing the different plasma activation efficiencies of demineralized water vs tap water;
Fig. 2 shows a block diagram of components of a device in accordance with one or more embodiments of the invention;
Fig. 3 shows a schematic illustration of a device in accordance with one or more particular embodiments of the invention; and
Fig. 4 shows a block diagram of steps of an example method in accordance with one or more embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a Plasma Activated Water (PAW) generating device which includes an integrated water demineralizer.

The advantage of incorporating an integrated water demineralizer in the PAW generator is that PAW generation is much more efficient when using demineralized water (as has already been discussed), and the resulting PAW has a better stability and antimicrobial activity. Of key importance in human applications (e.g. intra-orally) is the advantage of predictability of the outcome of the PAW, and therefore, not only the efficacy, but also the safety can be guaranteed.

Furthermore, the advantage of using demineralization (such as distillation or reverse osmosis) over simple filtration is that the water purity is better.

The basic principles behind generation of Plasma-Activated Water will now be outlined.

A general introduction to the concepts of Plasma Activated Water can be found in the paper: Soni, A et al, "Plasma-Activated Water (PAW) as a Disinfection Technology for Bacterial Inactivation with a Focus on Fruit and Vegetables".

As described in this paper, PAW generation employs use of so-called cold atmospheric pressure plasma (CAPP), or non-thermal plasma. Plasma consists of partially ionized gas, generated for example by applying a high level of energy to the gas, typically using one or more energized electrodes. It is composed of a wide variety of reactive species including excited atoms and molecules, positive and negative ions, free electrons, and irradiation. These species are highly reactive antimicrobial agents. Surfaces or substances to be decontaminated can be directly exposed to plasma discharges. Alternatively, plasma-activated water (PAW) effectively acts as a intermediary carrier for plasma-generated reactive species. Ordinary water can be exposed to a plasma discharge to 'plasma-activate' it, following which the water can be applied to surfaces or substances to be decontaminated.

PAW can be generated either by discharging plasma over the water surface, or by applying/injecting a plasma discharge directly within the body of water.

Options for the plasma source include for example gliding arc discharge, corona discharge, plasma streamer bubble, dielectric barrier discharge. Dielectric barrier discharge is perhaps the most common. In this approach, an insulating dielectric barrier separates two electrodes where the plasma is generated. A plasma jet is one variety of dielectric barrier discharge, and this uses a central needle electrode and one outer annular electrode and includes an additional gas flow which transports the plasma to the liquid source.

Further reference is made to the paper: Mai-Prochnow, A et al, "Interactions of plasma-activated water with biofilms: inactivation, dispersal effects and mechanisms of action."

As described in this paper, specifically in the section "How to generate PAW and regulate the aqueous RONS", Plasma-Activation of water can be achieved through any of three main techniques. All involve discharge of cold atmospheric plasma (CAPP) to the water. A first technique is discharge of gas-phase plasma over the surface of the liquid to be activated. A second is use of multiphase plasma discharges, in which plasma is ignited in bubbles or ignited in a gaseous phase, but mixed with water droplets. A third is direct plasma discharge or injection in the liquid to be activated.

Any of these techniques could be applied in the context of the present invention. Perhaps the simplest approach would be the first technique of discharge of gas-phase plasma over the liquid to be activated. In the context of the present invention, this could be achieved by discharging the plasma source over the demineralized water, e.g. over water distillate/condensate droplets formed as the output from the water demineralization means. In a preferred embodiment (to be discussed in more detail later), the gas-phase plasma could be discharged into the condensation chamber used by a distillation means, thereby exposing the water condensate droplets to the plasma and thereby plasma-activating the droplets.

The reader is further referred to the sections "Discharge over the Water Surface" (starting page 2), "Multiphase Discharges" (starting page 3), "Direct Plasma Discharge in Aqueous Solution" (on page 4) of the above-referenced paper authored by Mai-Prochnow, A et al, for further details on implementing each of the three techniques.

It has been a realization of the inventors that home-made plasma-activated water (PAW) could be an attractive alternative for anti-microbial fluid applications, such as for mouthwash, skin wash or sanitation solutions. The inventors have realized that PAW could be made at low cost from normal tap water. However, as already described, a problem is that the efficiency of PAW creation with tap water is much lower than with pure water, and, furthermore, tap water can be highly variable in terms of its quality, due to large regional differences.

Thus, embodiments of this invention seek to solve this problem by using a tap water demineralization module integrated in the PAW generating device. In a preferred embodiment, a small "coffee maker"-like boiler arrangement is included which boils the water to steam and allows the steam condensate inside the plasma reactor chamber. The ultrapure fine distilled water droplets quickly take up the generated reactive plasma agents, creating a highly active antimicrobial solution.

Fig. 2 outlines in block diagram form components of an example device according to one or more embodiments of the invention. The components will be recited in summary, before being explained further in the form of a more particular example embodiment.

Provided is a Plasma Activated Water (PAW) generating device 20. The device comprises a water demineralization means 24. The device further comprises a plasma-activation means 26, wherein the plasma activation means is adapted in use to plasma-activate water which has been demineralized by the water demineralization means 24. This thereby results in output plasma-activated water (PAW) 28 from the plasma-activation means.

An example implementation of the device according to a particular set of embodiments will now be described by way of illustration of the above-summarized concept of the invention. It will be appreciated that not all features of this particular set of embodiments are essential to the inventive concept, and are described to aid understanding and to provide an example to illustrate the inventive concepts. In this set of embodiments, the water demineralization means comprises a water distillation means for demineralizing water 22 by evaporation. Alternative demineralization technologies however also exist and would be suitable in variant embodiments, such as reverse osmosis.

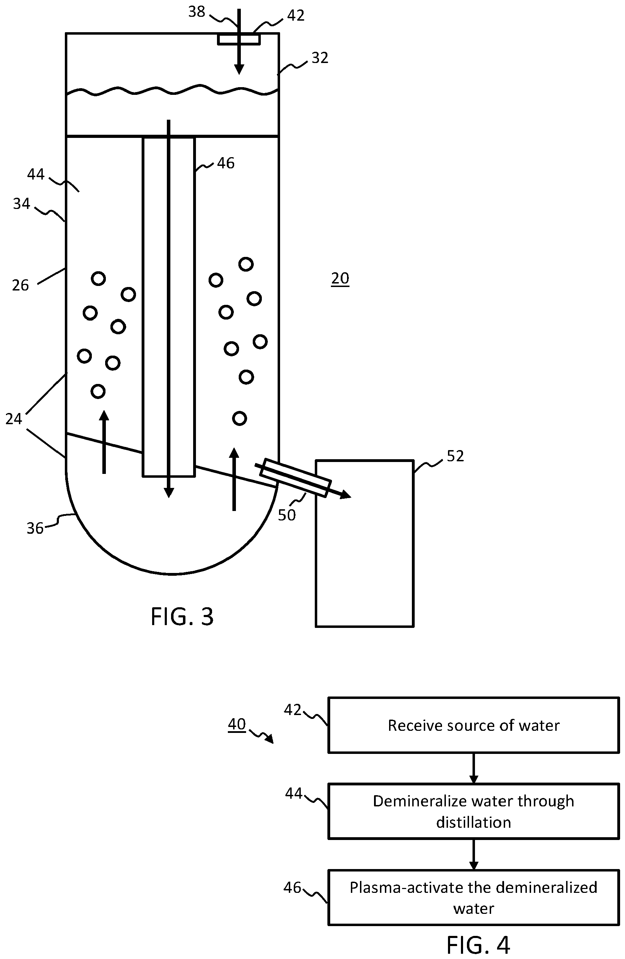

With reference to Fig. 3, in accordance with this particular set of embodiments, the device 20 comprises a water reservoir 32 for holding water-to-be-treated 22. The water reservoir may be filled with an input water source 38 via a fluid inlet 42. By way of example, the input water could be cold tap water. The inlet 42 indeed could be a main water connection point, for directly receiving a mains tap water supply.

The water from the reservoir 32 moves under the force of gravity into a small boiler 36 at base of the device via a conduit 46 connecting the water reservoir 32 to a chamber of the boiler 36. In this particular set of embodiments, the water reservoir is positioned so as, in use, to be raised gravitationally relative to the boiler 36. This for example permits a continuous supply of the boiler chamber from the reservoir through gravitational flow. The boiler heats the water to convert it into steam. The boiler may typically have a chamber for holding water to be evaporated and a heat source for heating the water to steam. Although a boiler is mentioned here, more generally, any form of water evaporator can be used which generates steam from an input water source.

The steam from the boiler 36 moves into a cool condensation chamber 34 which is arranged to receive the steam which is generated. In the illustrated example, the boiler 36 is located beneath the chamber 34, with both incorporated inside a common housing which contains the water evaporator 36, the chamber 34 and the water reservoir 32. The boiler is fluidly connected to the chamber to permit escape of the steam during use into the chamber above for condensation. The steam condenses to thereby generate pure demineralized water. The resulting pure water could then be plasma activated afterwards, for example by discharge of a cold atmospheric plasma over the pure water (the reader is referred to the descriptions above for more details about this technique).

However, in a preferred embodiment, which is shown in Fig. 3, the cold atmospheric plasma (e.g. plasma-phase air) is generated in, or discharged into, the condensation chamber 34 itself so that the single common chamber 34 acts as both a condensation chamber for condensing the steam and as a plasma activation chamber in which water reacts with plasma. As the tiny pure water droplets condensate in the presence of the reactive plasma components, the take up of those components is very fast and efficient.

As noted above, there are multiple techniques known in the art for generating the plasma for use in plasma-activating water. One approach would be to discharge gas-phase plasma over the demineralized water. In the context of the present set of embodiments, this could be achieved by discharging the plasma source over the water condensate droplets formed as the output from the water distillation means. In a preferred embodiment, gas-phase plasma could be discharged into the condensation chamber, thereby exposing the water condensate droplets to the plasma and plasma-activating the droplets. Techniques for generating the plasma discharge have already been discussed above, and will not be repeated here for brevity. Typically, a strong electrical field is created using two electrodes, for example a high frequency alternating field, and this converts gas into a plasma phase.

Finally, the condensed, plasma-activated droplets collect at the bottom of the chamber 34, dripping down into a collection chamber 52 which is fluidly connected to the interior of the condensation chamber 34 via a collector outlet 50. The user can then take the PAW from the collection chamber 52 for use. In a preferred design, and as illustrated in Fig. 3, the collection chamber 52 is arranged so that its inlet is gravitationally lower than the outlet of the condensation chamber 34, so that the condensed, plasma-activated water can drain by gravitational flow into the collection chamber 52. However, this is not essential and alternatively, the evacuation of the condensed, plasma-activated water could be achieved through use of one or more pumps.

It is noted that, over time, the remnants of the demineralized water may collect in the water evaporator 36 (e.g. calcium carbonate scaling). This could be ameliorated using descaling techniques and solutions already known for example within the field of steam irons.

In a preferred design, the input cold water-to-be-treated 38 acts to cools the distillation chamber 34 when running to the boiler 36 through the conduit 46, in a heat exchanger design. This thereby reduces the energy required for heating the water and eliminates the need for active cooling. An example of this arrangement is shown in Fig. 3, wherein the conduit 46, which fluidly connects the water inlet 42, via the water reservoir 32, to the water evaporator 36, passes through the chamber, with walls of the conduit 46 thereby exposed to an atmosphere 44 inside the chamber. More generally, it is sufficient if the conduit 46 is in thermal communication with the chamber 34, so as to enable heat transfer from the chamber to input water 38 flowing through the conduit 46. For example, the conduit could run around the outside of the chamber, for instance thermally coupled to walls of the chamber. The conduit could split in multiple branches for this purpose in some examples.

By way of summary of the above, the flow of water through the device is as follows. The device is filled at the top with, for example, tap water 38, which slowly dripples down through the heat exchanger conduit 46, warming up while moving down. After dripping into the boiler 36 chamber, it is quickly evaporated and moves as steam into the evaporation/plasma-activation chamber 34. There, the steam condenses into small droplets which quickly take up the reactive plasma compounds in the plasma-phase air which is supplied into the chamber 34.

The illustrated embodiment of Fig. 3 makes use of gravity for transport of liquid (down) and steam (up). This is a highly efficient solution. However, it is noted for avoidance of doubt that other configurations are possible, particularly if a pump is added for pumping the water. This adds expense to the device, but does also provide greater control.

Using embodiments of the present invention, in a relatively short time, a highly potent dose of PAW can be created. The size of the device 20 could be adapted depending upon the desired volumes of PAW to be generated per unit time. For certain personal care applications, volumes needed in a single generation session may be fairly small. For example, a typical mouthwash/deodorant volume for one time use is in the order of 20 ml. In this case, the device could be quite small. For example, it could have a size similar to a large deodorant can, for example approximately 30-100 mm in diameter, for example 30-60 mm in diameter, and approximately 200-250 mm high.

For other functional uses, such as for use as a fluid in an oral irrigator, where the volumes needed are much larger (e.g. 500 ml), the unit may need to be bigger, and/or the process time may be longer. For example, the PAW generation device may need to be started some time before intended use of the irrigator (e.g. 15 min). By way of example, the size of the device may have a size greater than 150 mm x 200 mm 250 mm, which is the size of a typical oral irrigator for example.

It is noted that although in above-described embodiments, the water demineralization is achieved with a water distillation means, other types of water demineralization means could instead be used. For example, reverse osmosis is a technology well known in the art to generate pure demineralized water. The advantage in this case is that there is no water evaporator required. However, the disadvantages are that high pressure pumps may be needed and that the membranes necessary in such devices need to be replaced regularly, which could add cost and inconvenience to an end user.

The inventive concept can also be embodied in the form of a method.

Thus, another aspect of the invention is a method for plasma-activation of water. The steps of an example method according to one or more embodiments are outlined in the form of a block diagram in Fig. 4.

The method 40 comprises receiving 42 a source of water to be treated. The method further comprises demineralizing 44 the water. The method further comprises plasma-activating 46 the demineralized water.

In some embodiments, the water may be demineralized through distillation.

Of course, any of the features, options or variations mentioned above in relation to the device aspect of the invention can be applied equally to the method aspect of the invention. For example, in one advantageous set of embodiments of the inventive method, the demineralization and the plasma-activating are both performed at least partially within a common chamber (see Fig. 3 for an illustration of such a common chamber 34). In particular, a water condensation part of the distillation and the plasma-activating are both performed in a common chamber in accordance with this set of one or more embodiments. In some embodiments, the method may comprise steps of: evaporating the water-to-be-treated to steam, the steam thereby being demineralized; condensing the steam in a chamber to produce water condensate; and plasma-activating the water condensate in the chamber. In some embodiments, the source of water-to-be-treated may be tap water.

The method could be computer-controlled. For example, a controller might be provided comprising one or more processors, and which is adapted to perform the method by control of a suitable apparatus, for example by control of the device as described in any embodiment or example in this disclosure, or in accordance with any claim of this application.

Another aspect of the invention is a computer program product comprising code means configured, when run on a processor, to cause the processor to control a suitable apparatus to perform the method 40 described above, for example by control of the device as described in any embodiment or example in this disclosure, or in accordance with any claim of this application.

A processor can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A Plasma Activated Water (PAW) generating device (20) comprising:
a water demineralization means (24) for demineralizing water; and
a water plasma-activation means (26),
wherein the water plasma-activation means (26) is arranged for plasma-activating water demineralized by the water demineralization means (24).

2. The device of claim 1, wherein the water demineralization means (24) comprises a water distillation means for demineralizing water by evaporation.

3. The device of claim 2, wherein
the water distillation means (24) includes a water evaporator (36) to generate steam from an input water source;
the device includes a chamber (34) arranged to receive the steam; and
the chamber acts as both a plasma activation chamber in which water reacts with plasma-phase air, and a condensation chamber for condensing the steam.

4. The device of claim 3, wherein
the device includes a water inlet (42, 32) for a user to input water-to-be-treated (38);
a conduit (46) fluidly connects the inlet to the water evaporator (36);
the conduit is in thermal communication with the chamber (34), for providing heat transfer from the chamber to input water flowing through the conduit.

5. The device of claim 4 wherein the conduit (46) passes through the chamber (34), with walls of the conduit exposed to an atmosphere (44) inside the chamber.

6. The device of any of claims 3-5, wherein the water evaporator (36) comprises a boiler having a boiler chamber for holding water to be evaporated and a heat source for heating the water to steam.

7. The device of claim 6, wherein:
the device comprises a housing;
wherein the boiler is located beneath the chamber in the housing;
wherein the boiler is fluidly connected to the chamber to permit escape of steam during use into the chamber above for condensation.

8. The device of any of claims 3-7, further comprising a collector outlet (50) for collecting condensed, plasma-activated water from the chamber.

9. The device of claim 8, wherein a floor of the chamber (34) is inclined toward the collector outlet (50).

10. The device of any of claims 3-9, wherein
the device further includes a water reservoir (32) for holding water-to-be-treated,
the water reservoir is positioned so as, in use, to be raised gravitationally relative to the water evaporator (36), and connected to the boiler chamber by a conduit, permitting continuous supply of the boiler chamber from the reservoir through gravitational flow.

11. The device of any of claims 1-10, wherein the device comprises a housing, and wherein the water demineralization means and water plasma activation means are integrated in the housing.

12. A method (40) for plasma-activation of water, comprising:
receiving (42) a source of water to be treated;
demineralizing (44) the water; and
plasma-activating (46) the demineralized water.

13. The method of claim 12, wherein the demineralizing and the plasma-activating are both performed at least partially within a common chamber.

14. The method of claim 13, wherein the method comprises:
evaporating the water-to-be-treated to steam, the steam thereby being demineralized;
condensing the steam in a chamber to produce water condensate;
plasma-activating the water condensate in the chamber.

15. The method of any of claims 12-14, wherein the source of water is tap water.
